# EUROPEAN PATENT SPECIFICATION

(11) **EP 1 333 107 B1**
(45) Date of publication and mention of the grant of the patent: **20.04.2011**
(21) Application number: 03006851.4
(22) Date of filing: 30.12.1999
(51) Int. Cl.: C23C 22/02, C09D 4/00, C09D 183/08, C09D 183/14

(54) **Silane coatings for metals**
Silanbeschichtungen für Metalle
Revêtements de silane pour métaux

(30) Priority: 30.12.1998 US 223210; 14.04.1999 GB 9908515; 19.07.1999 US 356912; 19.07.1999 US 356927
(43) Date of publication of application: 06.08.2003
(62) Divisional of application: 99968980.5
(73) Proprietor: UNIVERSITY OF CINCINNATI, Cincinnati, Ohio 45267-0829 (US)
(72) Inventor: Van Ooij, Win J., Fairfield, Ohio 45014 (US); Mee, Eric A., Goshen, Ohio 45122 (US); Jayasseelan, Sentil K., Dayton, Ohio 45449 (US)
(74) Representative: Jones, Helen M.M.

(56) References cited:
- EP-A- 0 435 781
- US-A- 3 842 111
- US-A- 4 151 157
- US-A- 5 622 782
- US-A- 5 789 080

## Description

### BACKGROUND OF THE INTENTION

### Field of the Invention

The present invention relates to silane coatings for metals. More particularly, the present invention provides silane coatings which not only provide improved adhesion to rubber and other polymers, but also provide corrosion protection (with or without a polymer layer).

### Description of Related Art

Most metals are susceptible to corrosion, including the formation of various types of rust. Such corrosion will significantly affect the quality of such metals, as well as that of the product produced therefrom. Although rust and the like may often be removed, such steps are costly and may further diminish the strength of the metal. In addition, when polymer coatings such as paints, adhesives or rubbers are applied to the metals, corrosion may cause a loss of adhesion between the polymer coating and the metal.

By way of example, metallic coated steel sheet such as galvanised steel is used in many industries, including the automotive, construction and appliance industries. In most cases, the galvanised steel is painted or otherwise coated with a polymer layer to achieve a durable and aesthetically-pleasing product. Galvanised steel, particularly hot-dipped galvanised steel, however, often develops "white rust" during storage and shipment.

White rust (also called "wet-storage stain") is typically caused by moisture condensation on the surface of galvanised steel which reacts with the zinc coating. On products such as GALVALUME®, the wet-storage stain is black in colour ("black rust"), White rust (as well as black rust) is aesthetically unappealing and impairs the ability of the galvanised steel to be painted or otherwise coated with a polymer. Thus, prior to such coating, the surface of the galvanised steel must be pretreated in order to remove the white rust and prevent its reformation beneath the polymer layer. Various methods are currently employed to not only prevent the formation of white rust during shipment and storage, but also to prevent the formation of white rust beneath a polymer coating (e.g. paint).

In order to prevent white rust on hot-dipped galvanised steel during storage and shipping, the surface of the steel is often passivated by forming a thin chromate film on the surface of the steel. While such chromate coatings do provide resistance to the formation of white rust, chromium is highly toxic and environmentally undesirable. It is also known to employ a phosphate conversion coating in conjunction with a chromate rinse in order to improve paint adherence and provide corrosion protection. It is believed that the chromate rinse covers the pores in the phosphate coating, thereby improving the corrosion resistance and adhesion performance. Once again, however, it is highly desirable to eliminate the use of chromate altogether. Unfortunately, however, the phosphate conversion coating is generally not very effective without the chromate rinse.

Recently, various techniques for eliminating the use of chromate have been proposed. In particular, various silane coatings have been developed for preventing corrosion of metal substrates. For example, US Patent No. 5,108,793 describes a technique of coating certain metal substrates with an inorganic silicate followed by treating the silicate coating with an organofunctional silane (US Patent No. 5,108,793). US Patent No. 5,292,549 teaches the rinsing of metallic coated steel sheet with a solution containing an organic silane and a crosslinking agent. Other silane coatings are described in US Patent No. 5,750,197 and 5,759,629, both of which are incorporated herein by way of reference.

Often, the corrosion protection provided by a particular silane coating will depend upon the identity of the metal substrate itself. In addition, the silane coating must also be compatible with any polymer layer to be applied over the silane coating (such as paints, adhesives or rubbers). For example, while a particular silane coating may provide excellent paint adhesion and corrosion protection, that same silane coating may provide little or no adhesion to certain rubbers. Thus, it is often necessary to tailor the silane coating to the specific application.

The silane coatings (or films) known heretofore are typically applied from an aqueous solution wherein the silane(s) are at least partially hydrolysed. The resulting silane films, however, often contain residual water that can only be driven out by a high temperature heat treatment. Although the films are usually somewhat crosslinked, higher degrees of crosslinking typically require high temperature heat treatment (e.g. 200°C). These silane films are often very thin and fragile, and never completely pore-free or impervious to water. Therefore, corrosion may still occur to some extent when silane coated metals are exposed to a humid environment for a lengthy period of time. While high temperature heat treatment may help alleviate some of these problems, high temperature heat treatment may not always be practical. Thus, there is a need for a silane coating having improved mechanical properties and higher crosslink density, without the need for high temperature processing.

In addition to corrosion prevention, adhesive bonding between metals and rubber is also of interest. For example, many automobile components (such as tire cords and vibration dampers) reply on adhesive bonding between a metal substrate and a sulfur-cured rubber. Steel tire cords, for example, are typically coated with a thin layer of brass in order to promote adhesion between the underlying steel and the sulfur-cured rubber. In addition, adhesion promoters such as cobalt salt additives, and HRH systems (hexamethylene tetramine resorcinol and hydrated silica) are also used to further enhance rubber adhesion for tire cords. Solvent-based adhesive systems are used in other applications for bonding metals to sulfur-cured rubbers. Although the performance of the various methods currently employed is adequate, they still suffer from several drawbacks. Cobalt salts, for example, are expensive and pose availability problems, while brass stimulates galvanic corrosion in conjunction with steel. Solvent-based adhesives are flammable and hence hazardous.

Although certain silanes have been found to promote adhesion between a metal substrate and a polymer layer, the results are typically system dependent. In other words, the amount of adhesion provided by a particular silane coating typically depends on the metal substrate as well as the polymer layer to be adhered thereto. For example, while certain silane solutions may provide improved adhesion between a metal substrate and a peroxide-cured rubber, these same silane solutions will often not provide the same results for sulfur-cured rubber. Thus, there is also a need for methods of improving the adhesion between a metal substrate and a polymer layer, particularly sulfur-cured rubber.

### SUMMARY OF THE INVENTION

It is an object of the present invention to provide silane coatings on a metal substrates for improving corrosion resistance and/or polymer adhesion.

It is another object of the present invention to provide silane coatings which provide improved adhesion to rubber, including sulfur-cured and peroxide-cured rubber.

The foregoing objects, in accordance with one aspect of the present invention, are provided by a method of treating a metal substrate, comprising:
(a) providing a metal substrate;
(b) applying a coating of a silane composition onto the metal substrate, said silane composition comprising at least one substantially unhydrolyzed aminosilane which has one or more secondary or tertiary amino groups, wherein said aminosilane comprises a bis-silyl aminosilane having the formula 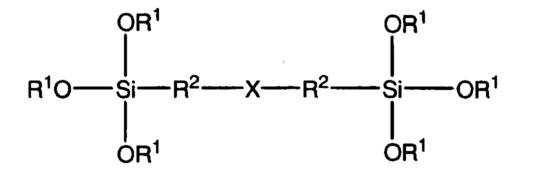 wherein:
   each R¹ is individually chosen from the group consisting of: C₁ -C₂₄ alkyl and C₂₋C₂₄ acyl;
   each R² individually chosen from the group consisting of: substituted aliphatic groups, unsubstituted aliphatic groups, substituted aromatic groups, and unsubstituted aromatic groups; and
   X is either: 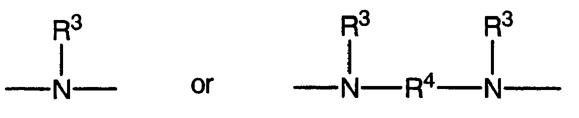
   wherein each R³ is individually chosen from the group consisting of: hydrogen, substituted and unsubstituted aliphatic groups, and substituted and unsubstituted aromatic groups; and
   R⁴ is chosen from the group consisting of: substituted and unsubstituted aliphatic groups, and substituted and unsubstituted aromatic groups; and
(c) adhering a polymer coating to the coating of silane on the metal substrate.

Exemplary aminosilanes include: bis-(trimethoxysilylpropyl)amine, bis-(triethoxysilylpropyl)amine and bis-(triethoxysilylpropyl)ethylene diamine.

Although the coating provided by the unhydrolysed aminosilane composition provides improved corrosion protection, the composition may further include at least one "other" substantially unhydrolysed silane (i.e. an unhydrolysed silane other than an aminosilane having at least one secondary or tertiary amino group). In particular, organofunctional silanes such as at least one substantially unhydrolysed bis-silyl polysulfur silane, may be included in order to provide improved adhesion to a polymer (such as a paint, an adhesive, or a rubber, including sulfur-cured rubber). Suitable "other" silanes include bis-silyl polysulfur silanes comprising: 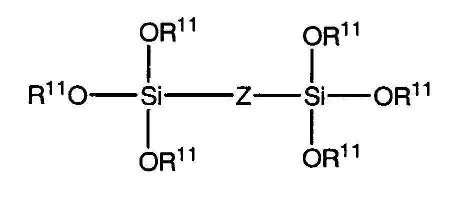 wherein each R¹¹ is an alkyl or an acetyl group, and Z is -Q-Sₓ-Q-wherein each Q is an aliphatic or aromatic group, and x is an integer of from 2 to 10. An exemplary bis-silyl polysulfur silane is bis-(triethoxysilylpropyl) tetrasulfide.

In one preferred embodiment, one or more substantially unhydrolysed bis-silyl aminosilanes are combined with one or more substantially unhydrolysed bis-silyl polysulfur silanes to provide a silane composition which may be applied to a metal substrate. The resultant silane coating not only provides corrosion protection (even without a polymer coating thereover), but also provides surprisingly improved adhesion to polymers such as paints, adhesives, and rubbers. In particular, the silane coating provides improved adhesion to sulfur-cured rubbers, as well as peroxide-cured rubbers. Uncured (or even cured) rubber compounds are simply applied directly on the silane coating, and then cured in the usual fashion (or, if already cured, the rubber is simply heated while applying pressure). Sulfur-cured and peroxide-cured rubber compounds known to those skilled in the art may be adhered to metal substrates in this manner, using standard rubber curing methods also known to those skilled in the art.

the present invention provides new compositions, particularly suitable for use in the method, at least one -O-Sₓ-Q-substantially unhydrolyzed aminosilane which has one or more secondary or tertiary amino groups chosen from the group consisting of: bis-(trimethyoxysilylpropyl)amine, bis-(triethoxysilylpropyl)amine, and bis-(triethoxysilylpropyl)ethylene diamine; and
at least one other substantially unhydrolyzed silane which comprises a bis-silyl polysulfur silane.

### DETAILED DESBRIPTION OF THE PREFERRED EMBODIMENTS

In US Patent No. 5,750,197, it was demonstrated that an aqueous solution of a hydrolysed bis-functional silane (such as 1,2-bis-(trimethoxysilylpropyl)amine) provides corrosion protection. The inventors have now found that mixtures of at least one aminosilane and at least one bis-silyl polysulfur silane provide further improvements in both corrosion protection and polymer adhesion (particularly to sulfur-cured rubber). The silanes do not have to be hydrolysed, as previously believed, since these silane mixtures provide corrosion protection and enhanced polymer adhesion whether hydrolysed or unhydrolysed. In addition, one or more unhydrolysed aminosilanes may even be applied to a metal substrate alone (with or without the addition of other silanes), since the inventors have found that silane coatings applied in this manner will form a dry film which provides corrosion protection. It is believed that secondary or tertiary amino groups in the aminosilane will crosslink, even if the aminosilane has not been hydrolysed, thereby allowing the formation of a dry film from a one or more unhydrolysed silanes.

The solutions and methods of the present invention may be used on a variety of metals, including (but not limited to):
zinc and zinc alloys, such as titanium-zinc (zinc which has a very small amount of titanium added thereto), zinc-nickel alloy (typically about 5% to about 13% nickel content), and zinc cobalt alloy (typically about 1% cobalt);
metal substrates having a zinc-containing coating, such as galvanised steel (especially hot dipped galvanised steel ("HDG") and electrogalvanised steel ("EGS")), GALVALUME® (a 55%-Al/43.4%-Zn/1.6% - Si alloy coated sheet steel manufactured and sold, for example, by Bethlehem Steel Corp), GALFAN® (a 5%-Al/95%-Zn alloy coated sheet steel manufactured and sold by Weirton Steel Corp., of Weirton, WV), galvanneal (annealed hot dipped galvanised steel) and similar types of coated metals;
steel, such as cold rolled steel, carbon steel, hot rolled steel and stainless steel, including steel which has been sandblasted;
aluminum and aluminum alloys;
copper and copper alloys, such as brass;
magnesium alloys; and
tin and tin alloys, including metal substrates (such as CRS) having tin-containing coatings.

The silane solutions and mixtures of the present invention may be applied to the metal prior to shipment to the end-user, and provide corrosion protection during shipment and storage. The coated metal may be used as is, or, more preferably the end-user may apply a polymer layer (such as paint, rubber, or adhesive) directly on top of the silane coating in the usual manner. The silane coatings of the present invention not only provide excellent corrosion protection, but also provide superior adhesion between the metal substrate and the polymer layer. These silane coatings (and films) are also very durable and highly deformable, and therefore provide significant corrosion protection even after deep drawing of the coated metal. The methods and compositions of the present invention are particularly useful for bonding metals to rubber, including sulfur-cured rubber. In fact, the present invention provides improved adhesion between metals and sulfur-cured rubber without the need for cobalt adhesion promoters in the rubber composition.

The metal substrate can even be sandblasted prior to applying the silane solutions and mixtures of the present invention. For example, a steel substrate (such as hot rolled steel) may be sandblasted prior to application of the solutions of the present invention. Sandblasting typically leaves a high surface roughness as well as surface contaminants, both of which create difficulties when one attempts to apply a coating to sandblasted substrates. The solutions and methods of the present invention, however, allow for the formation of silane coatings on sandblasted substrates.

The silane compositions of the present invention comprise one or more aminosilanes and one or more bis-silyl polysulfur silanes. The solutions do not require the use or addition of silicates or aluminates, and eliminate the need for phosphate conversion coatings. The silanes in the treatment solution may be substantially unhydrolysed. As used herein, the term "substantival unhydrolysed" simply means that the silane(s) are applied either in a pure state (no added solvents) or from a solution which does not include water. However, it is recognised that such silane(s) may absorb some water from the atmosphere, hence the term "substantially unhydrolysed" (water is not purposefully added to the silane(s)).

The silane solutions used in the present invention may comprise one or more substantially unhydrolysed aminosilanes having at least one secondary or tertiary amino group, with or without additional silanes or non-aqueous solvents. The inventors have found that these unhydrolysed aminosilanes will dry to a hard film at room temperature (typically in 30 minutes or less). The silane coating applied from one or more unhydrolysed aminosilanes will readily crosslink, and will even crosslink other silanes which are included in the coating. This finding is quite surprising, since conventional wisdom suggests that silanes should only be applied to metals in a hydrolysed state (i.e. from a solution which includes water).

The preferred bis-silyl aminosilanes which may be employed in the present invention have two trisubstituted silyl groups, wherein the substituents are individually chosen from the group consisting of alkoxy, aryloxy and acyloxy. Thus, bis-silyl aminosilanes have the general structure: 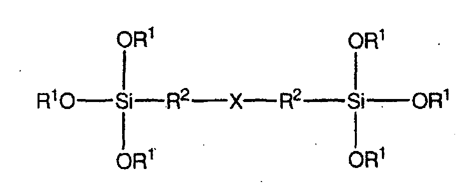 wherein each R¹ is chosen from the group consisting of: C₁-C₂₄ alkyl (preferably C,-C₆ alkyl), and C₂-C₂₄ acyl (preferably C₂-C₄ acyl). Each R¹ may be the same or different. Preferably, each R¹ is individually chosen from the group consisting of: ethyl, methyl, propyl, iso-propyl, butyl, iso-butyl, sec-butyl, ter-butyl and acetyl.

Each R² in the aminosilane(s) is a substituted or unsubstituted aliphatic group, or a substituted or unsubstituted aromatic group, and each R² may be the same or different. Preferably, each R² is chosen from the group consisting of: C,-C₁₀ alkylene, C₁-C₁₀ alkenylene, arylene and alkylarylene. More preferably, each R² is a C₁-C₁₀ alkylene (particularly propylene).

X is: 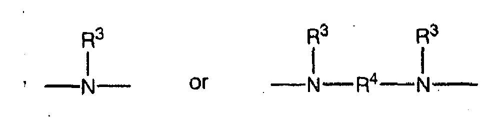 wherein each R³ is a hydrogen, a substituted or unsubstituted aliphatic group, or a substituted or unsubstituted aromatic group, and each R³ may be the same or different. Preferably, each R³ is chosen from the group consisting of hydrogen, C₁-C₆ alkyl and C₁-C₆ alkenyl. More preferably, each R³ is a hydrogen atom.

Finally, R¹ in the aminosilane(s) is a substituted or unsubstituted aliphatic group, or a substituted or unsubstituted aromatic group. Preferably, R⁴ is chosen from the group consisting of: C₁-C₁₀ alkylene, C₁-C₁₀ alkenylene, arylene and alkylarylene. More preferably, each R⁴ is a C₁-C₁₀ alkylene (particularly ethylene).

Exemplary preferred bis-silyl aminosilanes which may be used in the present invention include:
bis-(trimethoxysilylpropyl)amine (which is sold under the tradename A-1170 by Witco): 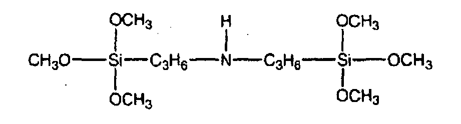 bis-(triethoxysilylpropyl)amine: 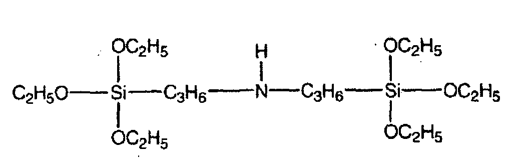 and bis-(triethoxysilylpropyl)ethylene diamine:

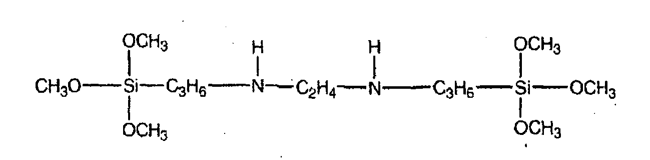

The preferred bis-sily polysulfur silanes which may be emplyed in the present invention include: 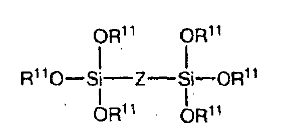 wherein each R¹ is as described before. In the hydrolysed silane solutions of the present invention, at least a portion (and preferably all or substantially all) of the R¹ groups are replaced by a hydrogen atom. Z is -O-Sₓ-Q-wherein each Q is an aliphatic (saturated or unsaturated) or aromatic group, and x is an integer of from 2 to 10. Q within the bis-functional polysulfur silane can be the same or different. In a preferred embodiment, each Q is individually chosed fro the group consisting of: C₁-C₆ alkyl (linear or branched), C₁-C₆ alkenyl (linear or branched), C₁-C₆ alkyl substituted with one or more amino groups, C₁-C₆ alkenyl substituted with one or more amino groups, benzyl, and benzyl substituted with C₁-C₆ alkyl.

Particularly preferred bis-silyl polysulfur silanes include bis-(triethoxysilylpropyl) sulfides having 2 to 10 sulfur atoms. Such compounds have the following formula: 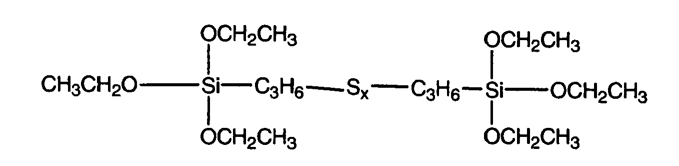 wherein x is an integer of from 2 to 10. One particularly preferred compound is bis-(triethoxysilylpropyl) tetrasulfide (also referred to as bis-(triethoxysilylpropyl) sulfate, or "TESPT"). Commercially-available forms of TESPT (such as A-1289, available from Witco), however, are actually mixtured of bis-(triethoxysilylpropyl) sulfides having 2 to 10 sulfur atoms. In other words, these commercially-available forms of TESPT have a distribution of sulfide chain lengths, ,with the S₃ and S₄ sulfides predominating.

### Coatings Applied from Unhydrolysed Silanes

The inventors have surprisingly found that unhydrolysed silanes may be applied directly onto the metal substrate in order to not only provide corrosion protection, but also to provide improved adhesion to polymer layers (such as paints, adhesives, or rubbers). Preferably, at least one aminosilane having at least one secondary or tertiary amino group (such as the bis-silyl aminosilanes described above) is applied to the metal substrate in a substantialyl unhydrolysed state (i.e. the R¹ groups are not replaced by a hydrogen atom). One or more additional silanes (organofunctional or non-organofunctional) may also be mixed with the aminosilane, however even an unhydrolysed aminosilane by itself provides corrosion protection.

The aminosilanes which may be applied to a metal substrate in an unhydrolysed state include aminosilanes having at least one secondary or tertiary amino group.

Particularly preferred aminosilanes include the bis-silyl aminosilanes described previously. aminoethyl-aminopropyltrimethoxy silane ("AEPS"), and bis-(triethoxysilypropyl)ethylene diamine (a bis-silyl, diamino silane).

The unhydrolysed secondary or tertiary aminosilane(s) may also be combined with one or more additional unhydrolysed silanes, particularly organofunctional sitanes, prior to application to the metal substrate. In this fashion, one can tailor the silane coating to the particular application. While one or more unhydrolysed secondary or tertiary aminosilane(s) will provide a durable, corrosion-preventing film, Applicants have found that the addition of one or more other unhydrolysed silanes (particularly organofunctional silanes, such as bis-silyl polysulfur silanes), will not only provide corrosion resistance but also polymer adhesion. "Organofunctional silane" simply means a silane having one or more trisubstituted silyl groups, and one or more organofunctional groups.

One preferred embodiment of the present invention comprises a mixture of one or more aminosilanes having at least one secondary or tertiary amino group (especially the bis-silyl aminosilanes described previously) and one or more bis-sityl polysulfur silanes (as described above), with the silanes in a substantially unhydrolysed state. The silane(s) (whether an aminosilane by itself, or a mixture of one or more aminosilanes and one or more other silanes) may be applied to the metal substrate as a pure silane mixture (i.e. no solvents or water), or may be diluted with a compatible solvent (other than water). Suitable solvents, for example, include, ethanol, methanol, propanol and isopropanol. Diluting the unhydrolysed silane(s) with a compatible solvent allows the thickness of the silane to the controlled.

The unhydrolysed silane(s) are simply coated onto the metal substrate, such as by wiping, dipping or spraying the silane (or silane mixture) onto the metal. Thereafter, preferably the silane coating is dried. If the unhydrolysed silane mixture applied to the metal substrate contains only aminosilanes, the coating is preferably dried at room temperature. Alternatively, the aminosilane coating may be dried by heating to a room temperature of between about 100°C and about 250°C for a period of time sufficient to form a dry film (i.e. silane coating).

When the unhydrolysed silane mixture applied to the metal substrate includes both an aminosilane (such as a bis-silyl aminosilane) and an organofunctional silane (such as a bis-silyl polysulfur silane), the silane coating is preferably dried by heating the coated metal to a temperature of between about 100°C and about 250°C (more preferably to a temperature of between about 100°C and about 160°C, for a period of time sufficient to form a dry film (such as about 10 to about 60 minutes). It should be noted, however, that the amount of drying time will obviously vary with the drying temperature, as well as the nature of the silane coating (e.g. silane concentrations, amount of organic solvent, etc.) Thus, longer periods of time than that specified may be used. As the coating dries, the unhydrolysed silanes will become partially crosslinked, thereby forming a semi-crosslinked silane coating which not only provides significant corrosion protection, but also improved adhesion to polymers such as paints, adhesives and rubbers (particularly sulfur-cured rubbers). When the unhydrolysed silane coating is used for polymer adhesion (particularly to sulfur-cured rubber), the silane coated metal should merely be dried for a period of time sufficient to form a dry film (i.e. so that the silane film is semi-crosslinked). When the silane film is intended to provide corrosion protection only, the silane film may be fully crosslinked (or cured) simply by heating the silane coated metal substrate for a longer period of time and/or at a higher temperature. While a fully crosslinked silane film is not desired for polymer adhesion, it will provide significant corrosion protection.

The unhydrolysed silane mixtures of the present invention are prepared simply by mixing the silanes with one another in their pure, unhydrolysed state in the desired ratio. The resulting silane mixture may be diluted with a compatible solvent, if desired. If a solvent is used, the total silane concentration should be at least about 10% (by volume), more preferably at least about 25%.

As for the ratio of unhydrolysed aminosilane(s) having at least one secondary or tertiary amino group (i.e. the unhydrolysed bis-silyl aminosilane) to other unhydrolysed silane(s) (such as unhydrolysed bis-silyl polysulfur silane(s)), a wide range of silane ratios provide beneficial results. Preferably, however the ratio of aminosilane(s) to other silanes is between about 1:10 and about 10:1. More preferably, particularly when the hydrolysed silane mixture is to be used for rubber bondong, this ratio is between about 1:3 and about 1:1.

The inventors have found that unhydrolysed silane compositions having at least one secondary or tertiary aminosilane (particularly at least one bis-silyl aminosilane) provide a silane coating which is highly resistant to corrosion. When the silane compositions include one or more organofunctional silanes (particularly at least one bis-silyl polysulfur silane), the resultant silane coating provides superior adhesion to polymers (such as paints, adhesives and rubbers). In fact, the adhesion to sulfur-cured rubbers is even greater than that provided by the hydrolysed silane solutions of the present invention. The hydrolysed silane compositions of the present invention provide unexpectedly high levels of adhesion to a variety of rubber compositions, including sulfur-cured rubber such as high-sulfur rubber systems, low-sulfur rubber systems, EV rubber systems, and semi-EV rubber systems.

The unhydrolysed silane compositions of the present invention also provide superior adhesion to other polymer layers, such as various types of paints. The inventors' testing has shown that the silane coatings of the present invention provide improved corrosion protection and improved adhesion to a variety of paints and paint systems, including polyester, polyurethane, epoxy and acrylic paints (or combinations thereof). These paints can be water-borne, solvent-based or even powder paints. Thus, the present application is not limited to silane coatings for improving corrosion protection or rubber adhesion.

The coatings provided by the unhydrolysed silane compositions of the present invention are also highly stable. Therefore, a polymer layer may be applied long after the silane coating is established on the metal substrate, and the silane coated metal ( without a polymer layer) may be exposed to the environment without significant deleterious effect. Thus, silane coatings provided by the unhydrolysed silane compositions of the present invention provide a high level of corrosion protection even without a polymer layer thereon, and will still provide improved polymer adhesion even after a lengthy exposure to the environment.

### EXAMPLES

Unhydrolysed silane compositions were employed. Unless otherwise noted, all of the silane coatings were applied from pure silanes (either pure A1170, or a mixture consisting only of A1170 and A1289 in the indicated ratio). After the silanes were mixed with one another, the resultant silane mixture was wiped onto the metal (which has been solvent-cleaned, alkaline-cleaned, water rinsed and dried) using a paper towel. Unless otherwise noted, the silane coating applied in this manner was then dried for one hour at 150°C.

In most of the rubber bonding tests which follow, three types of sulfur-cured rubber formulations were used: (1) a typical tire-cord skim compound having a cobalt adhesion promoter; (2) a typical tire-cord skim compound without cobalt adhesion promoter; and (3) a low-sulfur compound used, for example, in engine mount applications. The formulations employed are set forth below (in parts by weight).

### Rubber Formulations

| | **Compound 1** | **Compound 2** | **Compound 3** |
|---|---|---|---|
| NatSyn rubber | 100.0 | 100.0 | --- |
| natural rubber (SMR-5) | --- | --- | --- |
| Zinc Oxide | 10.0 | 10.0 | 3.0 |
| Stearic acid | 1.2 | 1.2 | 2.0 |
| Carbon black | 60.0 (N326) | 60.0 (N326) | 50.0 (N330) |
| Santofiex 13 | 1.0 | 1.0 | 2.0 |
| Sundex 790 | --- | --- | 10.0 |
| Cobalt naphthenate 10% | 2.0 | --- | --- |
| Vulkacit DZ | 0.5 | 0.5 | --- |
| PVI | 0.2 | 0.2 | --- |
| Insoluble sulfur (20% oil) | 7.0 | 7.0 | --- |
| Microcrystalline wax | --- | --- | 2.0 |
| CBS | --- | --- | 1.4 |
| Sulfur | --- | --- | 2.5 |

In order to evaluate the adhesion to rubber provided by the silane coatings, a layer of the specified uncured rubber composition was sandwiched between two silane coated panels. One half of each metal panel was shielded from the rubber by a Mylar film in order to prevent bonding in that region. The composite article was then cured in a hydraulic press at 160°C (8 minutes for Rubber Compound 1, 11 minutes for Rubber Compound 2, and 5 minutes for Rubber Compound 3). After curing, adhesion strength was measured by pulling portion of each metal panel not bonded to the cured rubber (because of the Mylar film) away from the rubber in opposite directions using an Instron Tensile Tester (Instron 4465) at a jaw speed of 2.54 cm/min. The force required to separate the composite is shown in the table, along with the failure mode. A "100% interface" failure mode means that the metal peeled away from the rubber, while "cohesive failure" means that the rubber itself failed before the metal to rubber bond.

### Example 1

Panels of 63/67 brass were coated with unhydrolysed silanes, and rubber adhesion was tested as described above:

| **Silane, Cone.** | **Rubber Compound** | **Instron N** | **Failure Mode** |
|---|---|---|---|
| Blank | 1 | 800 ± 50 | 100% Cohesive |
| A1170:A1289 = 1:3 | 1 | 685 ± 80 | 75% Cohesive |
| Blank | 2 | 450 ± 30 | 60% Cohesive |
| A1170:A1289 = 1:3 | 2 | 926 ± 70 | 90% Cohesive |
| Blank | 3 | 380 ± 33 | 100% interface |
| A1170:A1289 = 1:3 | 3 | 679 ± 49 | 70% Cohesive |

Although sulfur-cured rubber having a cobalt adhesion promoter adheres well to uncoated 63/67 brass, the unhydrolysed A1170/A1289 mixture provided excellent adhesion to all three rubber formulations (with or without the cobalt adhesion promoter). Thus, the silane mixtures of the present invention allows for the elimination of the cobalt adhesion promoter, while also providing improved corrosion protection.

### Example 2

Panels of Alloy 360 brass and Alloy 260 brass were coated with unhydrolysed silanes, and adhered to a rubber composition in the same manner as in Example 1. Rubber adhesion was then tested in accordance with ASTM D429(B), and the results are provided below.

| **Metal** | **Silane, Conc.** | **Rubber Compound** | **Adhesion N/mm** |
|---|---|---|---|
| Alloy 360 brass | Blank | 1 | 0 |
| | Blank | 2 | 0 |
| | A1170:A1289 = 1:3 | 2 | 10.46 ± 1.6 |
| Alloy 260 brass | Blank | 1 | 12.13 ± 3.0 |
| | Blank | 2 | 10.23 ± 3.6 |
| | A1170:A1289 = 1:3 | 2 | 11.14 ± 1.4 |

As the above indicates, the unhydrolysed silane mixtures of the present invention provide excellent rubber adhesion on a variety of brass alloys, including Alloy 360 brass (which will not adhere to sulfur-cured rubber).

### Example 3

Panels of CRS were coated with unhydrolysed silanes, and rubber adhesion was tested in the same manner as in Example 1:

| **Silane, Conc.** | **Rubber Compound** | **Instron N** | **Failure Mode** |
|---|---|---|---|
| Blank | 2 | 0 | 100% Interface |
| A1170:A1289 = 1:3* | 2 | 325 ± 36 | 10% Cohesive |
| A1170:A1289 = 1:3** | 2 | 752 ± 124 | 2 samples ≈ 80% cohesive failure, 1 sample ≈ cohesive failure |
| A1170:A1289 =1:3** | 2 | 476 ± 296 | 1 sample ≈ 80% cohesive failure, 2 samples ≈ 30% cohesive failure |
| A1170:A1289 = 1:1* | 2 | 284 ± 34 | 10% Cohesive |
| A1170:A1289 = 1:1** | 2 | 398 ± 163 | ≈ 20% Cohesive failure |
| A1170:A1289 = 1:1** | 2 | 261 ± 39 | 10% Cohesive failure |
| Blank | 3 | 0 | 100% Interface |
| A1170:A1289 = 1:3** | 3 | 209 ± 29 | 100% Interface |

| | | | |
|---|---|---|---|
| * silane mixture had aged for 2 days ** silane mixture had aged for one week | | | |

Once again the large discrepancies in the adhesion values noted in the above table are due, in part, to the nature of the test employed. Therefore, the mode of failure is considered by the Applicants to be more significant. The above results demonstrate that unhydrolysed mixtures of A1170 and A1289 provide even greater rubber adhesion than the hydrolysed silane solutions of the present invention. This is surprising since conventional wisdom teaches that silanes should be applied to metals in a hydrolysed state, rather than substantially unhydrolysed, In addition, Applicants have found that while unhydrolysed A1289 alone will not form a dry film, when combined with unhydrolysed A1170 it provides a superior, crosslinked silane coating. This highly crosslinked silane coating not only provides improved adhesion to rubbers and other polymers (such as paint), it also provides excellent corrosion protection (even without a polymer layer on top of the silane coatings).

### Example 4

Panels of EGS were coated with unhydrolysed silanes, and rubber adhesion was tested in the same manner as in Example 1:

| **Silane, Conc.** | **Rubber Compound** | **Instron N** | **Failure Mode** |
|---|---|---|---|
| Blank | 2 | 0 | 100% Interface |
| A1170:A1289 = 1:3* | 2 | 567 ± 200 | 2 samples 80% cohesive failure, 1 sample 30% cohesive failure |
| A1170:A1289 = 1:3** | 2 | 629 ± 132 | 1 sample = 80% cohesive failure, 2 samples ≈ 40% cohesive failure |
| A1170:A1289 = 1:3** | 2 | 422 ± 73 | 20% Cohesive failure |
| A1170:A1290 = 1:1* | 2 | 640 ± 70 | 85-90% Cohesive |
| A1170:A1289 = 1:1** | 2 | 606 ± 124 | = 40-50% Cohesive failure |
| A1170:A1289 = 1:1** | 2 | 433 ± 245 | 1 sample 80% cohesive failure, 2 samples 20% cohesive failure |
| Blank | 3 | 0 | 100% Interface |
| A1170:A1289 = 1:3** | 3 | 534 ± 157 | 2 samples 60% cohesive failure, 1 sample ≈ 40% cohesive failure |
| A1170:A1289 = 1:1** | 3 | 391 ± 135 | = 30% cohesive failure |

| | | | |
|---|---|---|---|
| * silane mixture had aged for 2 days ** silane mixture had aged for one week | | | |

### Example 5

Panels of NedZinc (a zinc-titanium alloy) were coated with unhydrolysed silanes, and rubber adhesion was tested in the same manner as in Example 1:

| **Silane, Conc.** | **Rubber Compound** | **Instron N** | **Failure Mode** |
|---|---|---|---|
| A1170:A 1289 = 1:3* | 2 | 434 ± 131 | 50% cohesive failure |

| | | | |
|---|---|---|---|
| * silane mixture had aged for 2 days | | | |

### Example 6

In order to evaluate the stability of aluminum to rubber bonding using unhydrolysed silanes, panels of aluminum were coated with unhydrolysed silanes. SBR, NBR and EPDM rubber compositions were used in this test, and the rubber formulations were as follows:

| | **SBR** | **NBR** |
|---|---|---|
| SBR 1500 | 100.0 | --- |
| NBR | --- | 100.0 |
| Zinc Oxide | 5.0 | 5.0 |
| Stearic Acid | 2.0 | 2.0 |
| Processing Aid | 4.0 | --- |
| DOP | --- | 10.0 |
| Carbon Black | 50.0 (N330) | 30.0 (N770) 70.0 (N550) |
| MBTS | 1.0 | --- |
| TMTD | 0.5 | 2.0 |
| Sulfur | 2.0 | 1.5 |
| CBS | --- | 1.0 |
| | | |

| | **EPDM 1** | **EPDM 2** |
|---|---|---|
| Vistalon 2504 | 100.0 | --- |
| Vistalon 5630/5300 | --- | 50.0/50.0 |
| Zinc Oxide | 5.0 | 5.0 |
| Stearic Acid | 1.0 | 1.0 |
| Aromatic Oil | 35.0 | --- |
| Naphthenic Oil | --- | 60.0 |
| Carbon Black | 60.0 (N990) 70.0 (N550 75.0 | 75.0 (N990) (N550) |
| TMTD | 0.6 | 2.0 |
| MBTS | 1.0 | --- |
| CBS | --- | 2.0 |
| ZDBC | 2.0 | --- |
| DTDM | --- | 2.0 |
| Sulfur | 2.0 | 0.3 |

The cured rubber compositions were applied to silane coated panels, and then cured by standard curing conditions. Rubber adhesion was tested according to ISO 813 (equivalent to ASTM D429B), and was reported qualitatively. The panels were tested immediately after curing, and after the specified exposure time in water at 100°C.

| **Silane, Conc.** | **Rubber Compound** | **Adhesion* after Exposure Time in Water, 100°C of:** | | | | |
|---|---|---|---|---|---|---|
| | | **Initial** | **24 hr** | **48 hr** | **72 hr** | **168 hr** |
| A1170:A1289 = 1:3 | EPDM 1 | 3.8 | 3.5 | 3.5 | 3.5 | 3.5 |
| A1170:A1289 = 1:3 | EPDM 2 | 3.5 | 3.4 | 3.4 | 3.4 | 3.0 |
| A1170:A1289 = 1:3 | SBR | 4 | 4 | 3.8 | 3.8 | 3.8 |
| A1170:A1289 = 1:3 | NBR | 4 | 4 | 4 | 4 | 4 |

| | | | | | | |
|---|---|---|---|---|---|---|
| *4 = ≥ 95% rubber (i.e. cohesive) failure 3 = high strength, partial rupture, >10% rubber failure 2 = medium strength peel - interfacial rupture 1 = low strength peel 0 = no bond | | | | | | |

### Example 7

Various other metals were adhered to rubber in the same manner as Example 6, using a mixture of unhydrolysed A1170 and unhydrolysed A1289 (1:3 ratio). Rubber adhesion was evaluated according to ISO 813, and the adhesion results are reported below (in N/mm).

| **Metal** | **Rubber Compound** | **Adhesion (N/mm) after Exposure Time in Water, 100°C for:** | | | |
|---|---|---|---|---|---|
| | | **Initial** | **72 hr** | **168 hr** | **336 hr** |
| 304 Stainless Steel | EPDM 1 | 6.1 8.0 | 7.1 | 6.1 8.5 | 8.1 |
| 1010 Carbon Steel | EPDM1 | 8.3 6.3 | 6.0 | 7.4 5.1 | 4.9 |
| Aluminum | EPDM 1 | 5.3 | 5.9 | 6.1 | |
| 70/30 Brass | EPDM 1 | 7.9 | 6.5 | 6.8 | |
| 304 Stainless Steel | NBR | 12.9 | 9.9 | 11.4 | |
| 1010 Carbon Steel | NBR | 14.6 | 10.4 | 15.3 | |
| Aluminum | NBR | 8.6 | 7.8 | 10.4 | |
| 70130 Brass | NBR | 15.1 | 934 | 8.7 | |
| 304 Stainless Steel | EPDM 3 | 8.9 | 8.5 | 5.6 | |
| 1010 Carbon Steel | NBR 2 | 20.6 | 10.3 | 9.4 | |

"EPDM 3" and "NBR 2" were standard peroxide-cured EPDM and NBR rubbers, respectively.

### Example 8

In order to examine the effect of silane aging, low carbon steel (SAE C-1018) was bonded to rubber in the same manner as in Example 7 (unhydrolysed silanes, A1170:A1289 = 1:3). Rubber adhesion was also tested in accordance with ASTM D429B.

| **Age of Silane Mixture** | **Peel Strength, N/mm** | **Mode of Failure** |
|---|---|---|
| Fresh | 11.7 ± 1.5 | 100% cohesive |
| Aged 2.5 weeks | 11.2 ± 1.3 | 100% cohesive |
| Aged 8 weeks | 13.0 ± 0.8 | 100% cohesive |

### Example 9

In order to examine the effect of silane concentration in the unhydrolysed systems of the present invention, CRS was bonded to rubber in the same manner as in Example 7 (unhydrolysed silanes, A1170:A1289 =1:3). Rubber adhesion was also tested in the same manner as in Example 8.

| **Silane, Conc.** | **Rubber Compound** | **Adhesion Strength (N/mm)** | **Failure Mode** |
|---|---|---|---|
| 100% silanes (A1170:A1289 = 1:3) | 2 | 11.7 ± 1.5 | 100% cohesive |
| 50% silanes in ethanol | 2 | 9.5 ± 1.7 | 100% cohesive |
| 25% silanes in ethanol | 2 | 10.4 ± 4.4 | 90% cohesive |
| 100% silanes (A1170:A1289 = 1:3) | 3 | 10.2 ± 2.3 | 80% cohesive |

As noted above, the unhydrolysed silane mixtures of the present invention may be applied as pure silanes (i.e. no solvents), or with significant quantities of non-aqueous solvents (such as ethanol or methanol).

### Comparison of Corrosion Protection Provided by Hydrolysed and Unhydrolysed Silanes

### Example 10

In order to examine the corrosion protection provided by the hydrolysed and unhydrolysed silane compositions of the present invention, silane coatings were applied to pure aluminum panels. The hydrolysed silane solutions were prepared and applied in the following manner:

For each of the silane solutions, the indicated concentration (by volume) of the silane was mixed with alcohol (methanol or ethanol) and an amount of water equivalent to the silane concentration. For example, a 5% A1170 solution was prepared by mixing 5% A1170, 5% water and 90% ethanol (by volume). The pH was adjusted to the indicated amount by adding acetic acid as needed. The silane solution was stirred for at least 24 hours in order to complete hydrolysis. For mixtures of A1170 and A1289, the silanes were separately hydrolysed in the same manner (5% silane, 5% water and 90% alcohol). After at least 24 hours of hydrolysis, the two silane solutions were mixed together to provide the indicated ratio of A1170:A1289, with the total silane concentration in the mixed silane solutions being 5% in all cases.

CRS panels were ultrasonically cleaned in acetone, hexane and methanol. The panels were then alkaline cleaned in the usual manner, rinsed in deionised water, and blow-dried with hot air. The panels were then dipped into the silane solution for 30-45 seconds, and thereafter dried.

The unhydrolysed silanes were prepared and applied as described in Example 1. The silane coated panels were then placed into a 3% NaCl solution for 192 hours. Corrosion was evaluated qualitatively, and the results are shown below.

| **Silane Solution** | **pH** | **Curing Conditions** | **Surface Observations** |
|---|---|---|---|
| Blank | N/A | --- | large size pits, distributed uniformly |
| A1170, hydrolysed, 5% solution | 8 | dried at room temp | small pits, distributed uniformly |
| A1289, hydrolysed, 5% solution | 8 | dried at room temp | almost original appearance |
| 5% A1170 + 5% A1289, hydrolysed | 8 | dried at room temp | almost original appearance |
| pure A1170, unhydrolysed | N/A | 160°C for 30 mins | original appearance |
| 1:1 mixture of A1170 and A1289, unhydrolysed (no solvent) | N/A | 160°C for 30 mins | almost original appearance |

As shown in the above table, the mixture of hydrolysed A1170 and A1289 provided excellent corrosion protection (superior to hydrolysed A1170 alone, and at least equivalent to hydrolysed A1289 alone). The unhydrolysed silanes (including pure A1170, as well as the A11701A1289 mixture) also provided excellent corrosion prevention. Thus, the silane solutions and methods of the present invention not only provide superior polymer adhesion, but also provide corrosion protection (with or without a polymer layer over the silane coating).

The corrosion protection provided by the methods of the present invention on CRS and EGS was also measured quantitatively by conducting standard electrochemical polarisation tests. The results of these tests are shown below, wherein the rate of corrosion is reported in millimetres per year.

| **Silane Solution** | **pH** | **Curing Conditions** | **Corrosion Rate (mpy)** |
|---|---|---|---|
| CRS | | | |
| Blank | N/A | --- | 143.4 |
| A1170, hydrolysed, 2% solution | 8 | 100°C for 10 mins | 36.6 |
| A1289, hydrolysed, 2% solution | 4.5-5 | 100°C for 10 mins | 5.7 |
| Pure A1170, unhydrolysed | N/A | dried at room temp | 5.6 |
| 1:3 mixture of A1170 and A1289, unhydrolysed (no solvent) | N/A | 160°C for 40 mins | 2.4 |
| EGS | | | |
| A1170, hydrolysed, 2% solution | 8 | 100°C for 10 mins | 30.7 |
| A1289, hydrolysed, 2% solution | 4.5-5 | 100°C for 10 mins | 0.78 |
| Pure A1170, unhydrolysed | N/A | dried at room temp | 3.7 |
| 1:3 mixture of A1170 and A1289, unhydrolysed (no solvent) | N/A | 160°C for 40 mins | 1.5 |

### Example 11

In order to examine the corrosion protection provided by the silane compositions of the present invention on magnesium alloys, a silane coating was applied to a panel of magnesium alloy AZ31-B in the manner described previously. It should be noted that both the silane coated panel, as well as the uncoated control, were first cleaned in a chromic acid solution in order to remove the graphite layer present on the panels. The silane solution comprised an unhydrolysed 1:1 mixture of A-1170 and A1289. The resulting silane film was dried at room temperature for 24 hours. The silane coated magnesium panel, as well as an uncoated magnesium panel, were then subjected to two hours of neutral salt spray testing in order to evaluate corrosion protection. The untreated panel showed an enormous amount of pitting, as well as uniform and galvanic corrosion. The silane treated panel exhibited no galvanic corrosion, and much less pitting and uniform corrosion than the untreated panel. Thus, the silane solutions and methods of the present invention provide corrosion protection on magnesium alloys (with or without a polymer layer over the silane coating).

## Claims

1. A method of treating a metal substrate, comprising:
(a) providing a metal substrate;
(b) applying a coating of a silane composition onto the metal substrate, said silane composition comprising at least one substantially unhydrolyzed aminosilane which has one or more secondary or tertiary amino groups, wherein said aminosilane comprises
a bis-silyl aminosilane having the formula 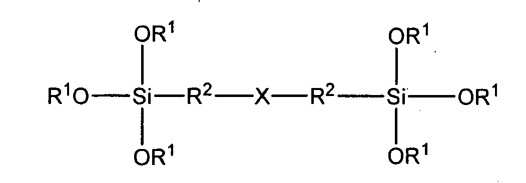 wherein:
each R¹ is individually chosen from the group consisting of: C₁ -C₂₄ alkyl and C₂₋C₂₄ acyl;
each R² individually chosen from the group consisting of: substituted aliphatic groups, unsubstituted aliphatic groups, substituted aromatic groups, and unsubstituted aromatic groups; and
X is either: 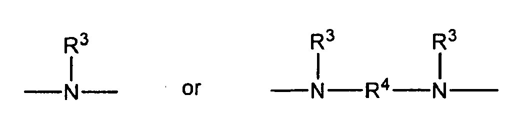
wherein each R³ is individually chosen from the group consisting of: hydrogen, substituted and unsubstituted aliphatic groups, and substituted and unsubstituted aromatic groups; and
R⁴ is chosen from the group consisting of: substituted and unsubstituted aliphatic groups, and substituted and unsubstituted aromatic groups; and
(c) adhering a polymer coating to the coating of silane on the metal substrate.

2. The method of claim 1, wherein each R¹ is individually chosen from the group consisting of: ethyl, methyl, propyl, iso-propyl, butyl, iso-butyl, sec-butyl, ter-butyl and acetyl.

3. The method of claim 1, wherein each R² is individually chosen from the group consisting of: hydrogen, ethyl, methyl, propyl, iso-propyl, butyl, iso-butyl, sec-butyl, ter-butyl and acetyl.

4. The method of claim 1, wherein said aminosilane is chosen from the group consisting of: bis-(trimethoxysilylpropyl)amine, bis-(triethoxysilylpropyl)amine, and bis-(triethoxysilylpropyl)ethylene diamine.

5. The method of claim 1, wherein said silane composition further comprises at least one additional substantially unhydrolyzed silane.

6. The method of claim 1, wherein said silane composition further comprises at least one substantially unhydrolyzed bis-silyl polysulfur silane.

7. The method of claim 6, wherein said bis-silyl polysulfur silane comprises: 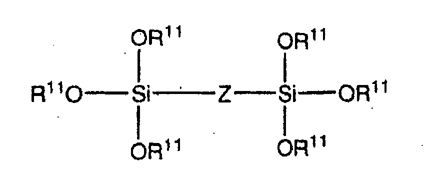 wherein each R¹¹ is an alkyl or an acetyl group, and Z is -Q-Sₓ-Q-wherein each Q is an aliphatic or aromatic group, and x is an integer of from 2 to 10.

8. The method of claim 7, wherein each R¹¹ is individually chosen from the group consisting of: ethyl, methyl, propyl, iso-propyl, butyl, iso-butyl, sec-butyl, ter-butyl and acetyl.

9. The method of claim 7, wherein each Q is individually chosen from the group consisting of: C₁-C₆ alkanediyl (linear or branched), C₁-C₆ alkenediyl (linear or branched), C₁-C₆ alkanediyl substituted with one or more amino groups, C₁-C₆ alkenediyl substituted with one or more amino groups, benzyl, and benzyl substituted with C₁-C₆ alkyl.

10. The method of claim 6, wherein said at least one bis-silyl polysulfur silane comprises a bis-(triethoxysilylpropyl) sulfide having 2 to 10 sulfur atoms.

11. The method of claim 6, wherein said at least one bis-silyl polysulfur silane comprises bis-(triethoxysilypropyl)tetrasulfide.

12. The method of claim 6, wherein the ratio of bis-silyl aminosilanes to bis-sityi polysulfur silanes in said silane composition is between 1:10 and 10:1.

13. The method of claim 6, wherein the ratio of bis-silyl aminosilanes to bis-silyl polysulfur silanes in said silane composition is between 1:3 and 1:1.

14. The method of claim 6, wherein said silane composition further comprises a non-aqueous solvent.

15. The method of claim 14, wherein said solvent is chosen from the group consisting of: ethanol, methanol, propanol and isopropanol.

16. The method of claim 1, wherein said silane composition consists essentially of at least one substantially unhydrolyzed bis-silyl aminosilane and at least one substantially unhydrolyzed bis-silyl polysulfur silane and optional solvent.

17. The method of claim 16, wherein said silane composition consists essentially of said at least one substantially unhydrolyzed bis-silyl aminosilane, said at least one substantially unhydrolyzed bis-silyl polysulfur silane, and a non-aqueous solvent.

18. The method of claim 6, further comprising the step of drying said coating of silane composition..

19. The method of claim 1, wherein said polymer layer comprises rubber.

20. The method of claim 19, wherein said polymer layer comprises a sulfur cured rubber.

21. A silane composition comprising:
at least one substantially unhydrolyzed aminosilane which has one or more secondary or tertiary amino groups chosen from the group consisting of: bis-(trimethyoxysilylpropyl)amine, bis-(triethoxysilyipropyl)amine, and bis-(triethoxysilylpropyl)ethylene diamine; and
at least one other substantially unhydrolyzed silane which comprises a bis-silyl polysulfur silane.

22. The silane composition of claim 21, wherein said bis-silyl polysulfur silane comprises: 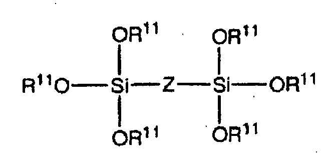 wherein each R¹¹ is an alkyl or an acetyl group, and Z is -Q-Sₓ-Q-wherein each Q is an aliphatic or aromatic group, and X is an integer of from 2 to 10.

23. The silane composition of claim 21, wherein said at least one bis-silyl polysulfur silane comprises a bis-(triethoxysilylpropyl) sulfide having 2 to 10- sulfur atoms.

24. The silane composition of claim 21, wherein the ratio of bis-silyl aminosilanes to bis-silyl polysulfur silanes in said silane composition is between about 1:10 and 10:1.

25. The silane composition of claim 21, wherein said silane composition further comprises a non-aqueous solvent.

26. The silane composition of claim 21, wherein said silane composition consists essentially of said at least one substantially unhydrolysed aminosilane and said at least one substantially unhydrolysed bis-silyl polysulfur silane.

## Patentansprüche

1. Verfahren zum Behandeln eines Metallsubstrats, umfassend:
(a) das Bereitstellen eines Metallsubstrats;
(b) das Aufbringen einer Beschichtung aus einer Silanzusammensetzung auf das Metallsubstrat, wobei die Silanzusammensetzung mindestens ein im Wesentlichen unhydrolysiertes Aminosilan umfasst, das eine oder mehrere sekundäre oder tertiäre Aminogruppen aufweist, wobei das Aminosilan
ein Bissilylaminosilan umfasst, das die Formel 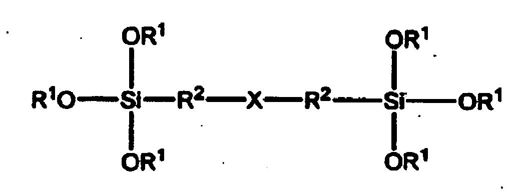 aufweist, wobei:
jedes R¹ einzeln aus der Gruppe ausgewählt ist bestehend aus: C₁-C₂₄-Alkyl und C₂-C₂₄-Acyl;
jedes R² einzeln aus der Gruppe ausgewählt ist bestehend aus: substituierten aliphatischen Gruppen, unsubstituierten aliphatischen Gruppen, substituierten aromatischen Gruppen und unsubstituierten aromatischen Gruppen; und
X entweder: 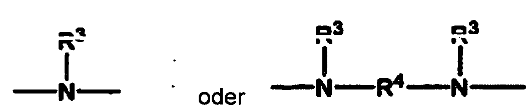
ist, wobei jedes R³ einzeln aus der Gruppe ausgewählt ist bestehend aus: Wasserstoff, substituierten und unsubstituierten aliphatischen Gruppen und substituierten und unsubstituierten aromatischen Gruppen; und
R⁴ aus der Gruppe ausgewählt ist bestehend aus: substituierten und unsubstituierten aliphatischen Gruppen und substituierten und unsubstituierten aromatischen Gruppen; und
(c) das Befestigen einer Polymerbeschichtung an der Silanbeschichtung auf dem Metallsubstrat.

2. Verfahren nach Anspruch 1, wobei jedes R¹ einzeln aus der Gruppe ausgewählt ist bestehend aus: Ethyl, Methyl, Propyl, Isopropyl, Butyl, Isobutyl, sec.-Butyl, ter-Butyl und Acetyl.

3. Verfahren nach Anspruch 1, wobei jedes R² einzeln aus der Gruppe ausgewählt ist bestehend aus: Wasserstoff, Ethyl, Methyl, Propyl, Isopropyl, Butyl, Isobutyl, sec.-Butyl, ter-Butyl und Acetyl.

4. Verfahren nach Anspruch 1, wobei das Aminosilan aus der Gruppe ausgewählt ist bestehend aus: Bis-(trimethoxysilylpropyl)amin, Bis-(triethoxysilylpropyl)amin und Bis-(triethoxysilylpropyl)ethylendiamin.

5. Verfahren nach Anspruch 1, wobei die Silanzusammensetzung des Weiteren mindestens ein zusätzliches, im Wesentlichen unhydrolysiertes Silan umfasst.

6. Verfahren nach Anspruch 1, wobei die Silanzusammensetzung des Weiteren mindestens ein im Wesentlichen unhydrolysiertes Bissilylpolyschwefelsilan umfasst.

7. Verfahren nach Anspruch 6, wobei das Bissilylpolyschwefelsilan Folgendes umfasst: 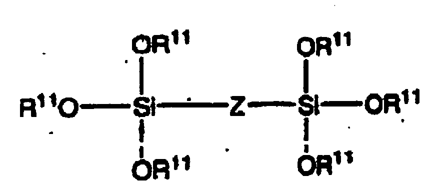 wobei jedes R¹¹ eine Alkyl- oder eine Acetylgruppe ist und Z -Q-Sₓ-Q- ist, wobei jedes Q eine aliphatische oder aromatische Gruppe ist und x eine ganze Zahl von 2 bis 10 ist.

8. Verfahren nach Anspruch 7, wobei jedes R¹¹ einzeln aus der Gruppe ausgewählt ist bestehend aus: Ethyl, Methyl, Propyl, Isopropyl, Butyl, Isobutyl, sec.-Butyl, ter-Butyl und Acetyl.

9. Verfahren nach Anspruch 7, wobei Q einzeln aus der Gruppe ausgewählt ist bestehend aus: C₁-C₆-Alkandiyl (linear oder verzweigt), C₁-C₆-Alkendiyl (linear oder verzweigt), C₁-C₆-Alkandiyl, das mit einer oder mehreren Aminogruppen substituiert ist, C₁-C₆-Alkendiyl, das mit einer oder mehreren Aminogruppen substituiert ist, Benzyl und Benzyl, das mit C₁-C₆-Alkyl substituiert ist.

10. Verfahren nach Anspruch 6, wobei das mindestens eine Bissilylpolyschwefelsilan ein Bis-(triethoxysilylpropyl)sulfid umfasst, das 2 bis 10 Schwefelatome aufweist.

11. Verfahren nach Anspruch 6, wobei mindestens ein Bissilylpolyschwefelsilan Bis-(triethoxysilylpropyl)tetrasulfid umfasst.

12. Verfahren nach Anspruch 6, wobei das Verhältnis von Bissilylaminosilanen zu Bissilylpolyschwefelsilanen in der Silanzusammensetzung zwischen 1:10 und 10:1 1 liegt.

13. Verfahren nach Anspruch 6, wobei das Verhältnis von Bissilylaminosilanen zu Bissilylpolyschwefelsilanen in der Silanzusammensetzung zwischen 1:3 und 1:1 liegt.

14. Verfahren nach Anspruch 6, wobei die Silanzusammensetzung des Weiteren ein nichtwässriges Lösungsmittel umfasst.

15. Verfahren nach Anspruch 14, wobei das Lösungsmittel aus der Gruppe ausgewählt ist bestehend aus: Ethanol, Methanol, Propanol und Isopropanol.

16. Verfahren nach Anspruch 1, wobei die Silanzusammensetzung im Wesentlichen aus mindestens einem im Wesentlichen unhvdrolysierten Bissilylaminosilan und mindestens einem im Wesentlichen unhydrolysierten Bissilylpolyschwefelsilan und wahlweise Lösungsmittel besteht.

17. Verfahren nach Anspruch 16, wobei die Silanzusammensetzung im Wesentlichen aus dem mindestens einen im Wesentlichen unhydrolysierten Bissilylaminosilan, dem mindestens einen im Wesentlichen unhydrolysierten Bissilylpolyschwefelsilan und einem nichtwässrigen Lösungsmittel besteht.

18. Verfahren nach Anspruch 6, des Weiteren den Schritt des Trocknens der Beschichtung aus der Silanzusammensetzung umfassend.

19. Verfahren nach Anspruch 1, wobei die Polymerschicht Kautschuk umfasst.

20. Verfahren nach Anspruch 19, wobei die Polymerschicht einen schwefelausgehärteten Kautschuk umfasst.

21. Silanzusammensetzung umfassend:
mindestens ein im Wesentlichen unhydrolysiertes Aminosilan, das eine oder mehrere sekundäre oder tertiäre Aminogruppen aufweist, die aus der Gruppe ausgewählt sind bestehend aus: Bis-(trimethoxysilylpropyl)amin, Bis-(triethoxysilylpropyl)amin und Bis-(triethoxysilylpropyl)ethylendiamin; und
mindestens ein im Wesentlichen unhydrolysiertes Silan, das ein Bissilylpolyschwefelsilan umfasst.

22. Silanzusammensetzung nach Anspruch 21, wobei das Bissilylpolyschwefelsilan 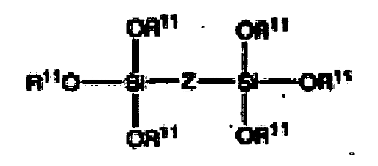 umfasst, wobei jedes R¹¹ eine Alkyl- oder eine Acetylgruppe ist und Z -Q-Sₓ-Q- ist, wobei jedes Q eine aliphatische oder aromatische Gruppe ist und X eine ganze Zahl von 2 bis 10 ist.

23. Silanzusammensetzung nach Anspruch 21, wobei das mindestens eine Bissilylpolyschwefelsilan ein Bis (triothoxysilylpropyl)sulfid umfasst, das 2 bis 10 Schwefelatome aufweist.

24. Silanzusammensetzung nach Anspruch 21, wobei das Verhältnis von Bissilylaminosilanen zu Bissilylpolyschwefelsilanen in der Silanzusammensetzung zwischen etwa 1:10 und 10:1 liegt.

25. Silanzusammensetzung nach Anspruch 21, wobei die Silanzusammensetzung des Weiteren ein nichtwässriges Lösungsmittel umfasst.

26. Silanzusammensetzung nach Anspruch 21, wobei die Silanzusammensetzung im Wesentlichen aus dem mindestens einen im Wesentlichen unhydrolysierten Aminosilan und dem mindestens einen im Wesentlichen unhydrolysierten Bissilylpolyschwefelsilan besteht.

## Revendications

1. Procédé pour traiter un substrat métallique comprenant les étapes suivantes :
(a) fournir un substrat métallique ;
(b) appliquer un enduit d'une composition de silanes au substrat métallique, ladite composition de silanes comprenant au moins un aminosilane sensiblement non-hydrolysé qui possède un ou plusieurs groupe(s) amino secondaire(s) ou tertiaire(s) dans lequel ledit aminosilane comprend :
un bis-silyl aminosilane ayant la formule 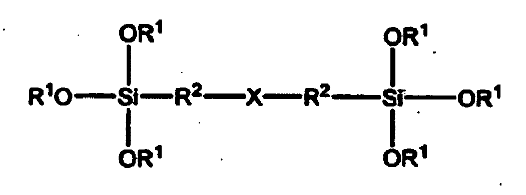
dans laquelle :
chaque R¹ est sélectionné parmi le groupe constitué de : alkyle C₁-C₂₄ , et acyle C₂-C₂₄ ;
chaque R² est sélectionné individuellement parmi le groupe constitué de : groupes aliphatiques substitués, groupes aliphatiques non-substitués, groupes aromatiques substitués et groupes aromatiques non-substitués ; et
X est soit : 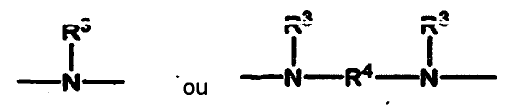 dans laquelle :
chaque R³ est sélectionné parmi le groupe constitué de : hydrogène, groupes aliphatiques substitués et non-substitués, et groupes aromatiques substitués et non-substitués ; et
R⁴ est sélectionné parmi le groupe constitué de : groupes aliphatiques substitués et non-substitués, et groupes aromatiques substitués et non-substitués ; et
(c) faire adhérer un enduit polymère à l'enduit de silanes sur le substrat métallique.

2. Procédé selon la revendication 1, dans lequel chaque R¹ est sélectionné individuellement parmi le groupe constitué de : éthyle, méthyle, propyle, isopropyle, butyle, isobutyle, sec-butyle, ter-butyle, et acétyle.

3. Procédé selon la revendication 1, dans lequel chaque R² est sélectionné individuellement parmi le groupe constitué de : hydrogène, éthyle, méthyle, propyle, isopropyle, butyle, isobutyle, sec-butyle, ter-butyle, et acétyle.

4. Procédé selon la revendication 1, dans lequel ledit aminosilane est sélectionné parmi le groupe constitué de : bis-(triméthoxysilylpropyl)amine, bis-(triéthoxysilylpropyl)amine, et bis-(triéthoxysilylpropyl)éthylènediamine.

5. Procédé selon la revendication 1, dans lequel ladite composition de silanes comprend en outre au moins un silane sensiblement non-hydrolysé supplémentaire.

6. Procédé selon la revendication 1, dans lequel ladite composition de silanes comprend au moins un bis-silyl polysulfure silane sensiblement non-hydrolysé.

7. Procédé selon la revendication 6, dans laquelle ledit bis-silyl polysulfure silane comprend : 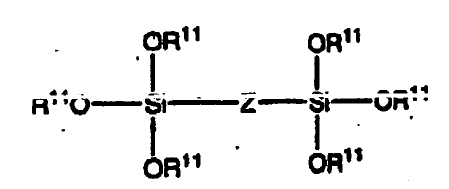 dans lequel chaque R¹¹ est un groupe alkyle ou acétyle, et Z est -Q-Sₓ-Q-
dans lequel chaque Q est un groupe aliphatique ou aromatique, et x est un entier compris entre 2 et 10.

8. Procédé selon la revendication 7, dans lequel chaque R¹¹ est sélectionné individuellement parmi le groupe constitué de : éthyle, méthyle, propyle, isopropyle, butyle, isobutyle, sec-butyle, ter-butyle, et acétyle.

9. Procédé selon la revendication 7, dans lequel chaque Q est sélectionné individuellement parmi le groupe constitué de : alkanédiyle C₁-C₈ (linéaire ou ramifié), alkénédiyle C₁-C₆ (linéaire ou ramifié), alkanédiyle C₁-C₆ substitué avec un ou plusieurs groupes amino, alkénédiyle C₁-C₆ substitué avec un ou plusieurs groupes amino, benzyle, et benzyle substitués avec alkyle C₁-C₆.

10. Procédé selon la revendication 6, dans lequel ledit au moins un bis-silyle polysulfure silane comprend un bis-(triéthoxysilylpropyl) sulfure ayant 2 à 10 atomes de soufre.

11. Procédé selon la revendication 6, dans lequel le au moins un bis-silyle polysulfure silane comprend du bis-(triéthoxysilylpropyl)tétrasulfure.

12. Procédé selon la revendication 6, dans lequel le ratio entre les bis-silyle aminosilanes et les bis-silyle polysulfure silanes dans ladite composition de silanes se situe entre 1:10 et 10:1.

13. Procédé selon la revendication 6, dans lequel le ratio entre les bis-silyle aminosilanes et les bis-silyle polysulfure silanes dans ladite composition de silanes se situe entre 1:3 et 1:1.

14. Procédé selon la revendication 6, dans laquelle ladite composition de silanes comprend en outre un solvant non aqueux.

15. Procédé selon la revendication 14, dans lequel ledit solvant est sélectionné parmi le groupe constitué de : éthanol, méthanol, propanol et isopropanol.

16. Procédé selon la revendication 1, dans lequel ladite composition de silanes est constituée essentiellement de : au moins un bis-silyl aminosilane sensiblement non-hydrolysé, au moins un bis-silyl polysulfure silane sensiblement non-hydrolysé et un solvant optionnel.

17. Procédé selon la revendication 16, dans lequel ladite composition de silanes est constituée essentiellement de : ledit au moins un bis-silyl aminosilane sensiblement non-hydrolysé, ledit au moins un bis-silyl polysulfure silane sensiblement non-hydrolysé et un solvant non aqueux.

18. Procédé selon la revendication 6, comprenant en outre l'étape consistant à sécher ledit enduit de composition de silane.

19. Procédé selon la revendication 1, dans lequel ladite couche de polymère comprend du caoutchouc.

20. Procédé selon la revendication 19, dans lequel ladite couche de polymère comprend un caoutchouc vulcanisé au soufre.

21. Composition de silanes constituée de :
au moins un aminosilane sensiblement non-hydrolysé qui possède un ou plusieurs groupe(s) amino secondaire(s) ou tertiaire(s) sélectionné(s) parmi le groupe constitué de : bis-(triméthoxysilylpropyl)amine, bis-(triéthoxysilylpropyl)amine, et bis-(triéthoxysilylpropyl)-éthylènediamine ; et
au moins un autre silane sensiblement non-hydrolysé qui comprend un bis-silyl polysulfure silane.

22. Composition de silanes selon la revendication 21, dans laquelle ledit bis-silyl polysulfure silane comprend : 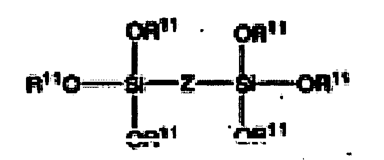 dans lequel chaque R₁₁ est un groupe alkyle ou acétyle, et Z est -Q-Sₓ-Q-
dans lequel chaque Q est un groupe aliphatique ou aromatique, et x est un entier compris entre 2 et 10.

23. Composition de silanes selon la revendication 21, dans laquelle ledit au moins un bis-silyle polysulfure silane comprend un bis-(triéthoxysilylpropyl) sulfure ayant de 2 à 10 atomes de soufre.

24. Composition de silanes selon la revendication 21, dans laquelle le ratio entre les bis-silyle aminosilanes et les bis-silyle polysulfure silanes dans ladite composition de silanes se situe entre environ 1:10 et 10:1.

25. Composition de silanes selon la revendication 21, dans laquelle ladite composition de silanes comprend en outre un solvant non aqueux.

26. Composition de silanes selon la revendication 21, dans laquelle ladite composition de silanes est essentiellement constituée de : ledit au moins un aminosilane sensiblement non-hydrolysé et ledit au moins un bis-silyl polysulfure silane sensiblement non-hydrolysé.
